# EUROPÄISCHE PATENTSCHRIFT

(11) **EP 1 230 488 B1**
(45) Veröffentlichungstag und Bekanntmachung des Hinweises auf die Patenterteilung: **19.05.2004**
(21) Anmeldenummer: 00987054.4
(22) Anmeldetag: 31.10.2000
(51) Int. Cl.: F15B 21/08

(54) **REGELANORDNUNG FÜR EIN HYDRAULISCHES ODER PNEUMATISCHES SYSTEM**
CONTROL ARRANGEMENT FOR A HYDRAULIC OR PNEUMATIC SYSTEM
DISPOSITIF DE REGULATION POUR SYSTEME HYDRAULIQUE OU PNEUMATIQUE

(30) Priorität: 05.11.1999 DE 19953189
(43) Veröffentlichungstag der Anmeldung: 14.08.2002
(73) Patentinhaber: ROBERT BOSCH GMBH, 70442 Stuttgart (DE)
(72) Erfinder: PFUHL, Berthold, 71706 Markgröningen (DE); LEUTNER, Volkmar, 71292 Friolzheim (DE); BLUMENDELLER, Wilhelm, 71691 Freiberg (DE); MELZER, Stefan, 64739 Hoechst (DE); PUNZET, Alfred, 64711 Erbach (DE); HAGEMEISTER, Wilhelm, 47661 Issum (DE); FALLER, Markus, 71665 Vaihingen (DE)
(74) Vertreter: Thürer, Andreas
(86) Internationale Anmeldenummer: PCT/DE2000/003835
(87) Internationale Veröffentlichungsnummer: WO 2001/033087

(56) Entgegenhaltungen:
- EP-A- 0 240 965
- EP-A- 0 393 697
- EP-A- 0 688 957
- EP-A- 0 813 128
- WO-A-92/04813
- DE-A- 3 835 755
- DE-A- 4 334 980
- US-A- 4 811 561
- SCHNEIDER H J: "ACHEMA '91: SENSORSYSTEME FUER DIE BETRIEBSMESSTECHNIK UND KOMMUNIKATION IM FELD. \ACHEMA '91: SENSOR SYSTEMS FOR MEASURING AND COMMUNICATION TECHNOLOGY IN PRODUCTION PLANTS" AUTOMATISIERUNGSTECHNISCHE PRAXIS - ATP,DE,OLDENBOURG VERLAG. MUNCHEN, Bd. 33, Nr. 10, 1. Oktober 1991 (1991-10-01), Seiten 511-528, XP000265908 ISSN: 0178-2320
- FALLER M: "PROPORTIONALVENTILE MIT FELDBUSSCHNITTSTELLE" OLHYDRAULIK UND PNEUMATIK,KRAUSSKOPF VERLAG FUR WIRTSCHAFT GMBH. MAINZ,DE, Bd. 43, Nr. 8, August 1999 (1999-08), Seiten 602-606, XP000860871 ISSN: 0341-2660
- BUBLITZ R: "PROFIL FLUIDTECHNIK-EIN GERAETEPROFIL FUER DIE HYDRAULIK" OLHYDRAULIK UND PNEUMATIK,KRAUSSKOPF VERLAG FUR WIRTSCHAFT GMBH. MAINZ,DE, Bd. 43, Nr. 8, August 1999 (1999-08), Seiten 595-596,598-601, XP000860870 ISSN: 0341-2660
- LEUTNER V ET AL: "ELEKTRONIK IN DER FLUIDTECHNIK" OLHYDRAULIK UND PNEUMATIK,DE,VEREINIGTE FACHVERLAGE, MAINZ, Bd. 42, Nr. 6, 1998, Seiten 367-368,370-372, XP000764296 ISSN: 0341-2660

## Beschreibung

Die Erfindung betrifft eine Regelanordnung für ein fluidisches System mit mindestens einem elektrohydraulischen oder elektropneumatischen Regelventil sowie mit einem von diesem mit Druckmittel beaufschlagten hydraulischen bzw. pneumatischen Zylinder und mit Sensoren für mindestens eine Zustandsgröße des Systems nach der Gattung des Hauptanspruchs.

Die an sich bekannten Regelventile werden beispielsweise als Stellelemente in geregelten hydraulischen Antrieben eingesetzt. Die hier geregelten Größen sind üblicherweise der Druck, der Volumenstrom der Hydraulikflüssigkeit oder die Geschwindigkeit und die Lage des Ventilkolbens, wobei auch mehrere Größen gleichzeitig geregelt werden müssen. Für ein zufriedenstellendes Regelergebnis müssen diese Zustandsgrößen ohne große Zeitverzögerung zur Verfügung gestellt werden.

Aus der EP-A-0 393 697 ist eine Regelanordnung der eingangs genannten Art für ein fluidisches System bekannt. Ein elektrohydraulisches Regelventil beaufschlagt einen hydraulischen Zylinder mit hydraulischem Druckmittel. Weiterhin sind Sensoren zur Erfassung von Zustandsgrößen des fluidischen Systems vorgesehen. Die Sensoren erfassen die Position des Schiebers des Regelventils, die Position des Kolbens des Zylinders sowie den Druck in den von dem Regelventil zu dem Zylinder führenden Leitungen. An dem Regelventil ist eine elektronische Schaltung angeordnet, die als Reglereinheit für regelbare Zustandsgrößen und zur Steuerung des Regelventils dient. Die elektronische Schaltung wertet die Zustandsgrößen aus und erzeugt entsprechende Stellsignale für ihre Regelung. Das Regelventil ist über ein Bussystem mit einer übergeordneten Steuereinheit verbunden. Die einzelnen Teilnehmer des Bussystems sind üblicherweise über Koppeleinheiten mit dem Bussystem verbunden. Die EP-A-0 393 697 betrifft eine Regelanordnung mit einem Regelventil und mehreren Zustandsgrößen.

Aus der DE 43 34 980 C2 ist eine Regelanordnung bekannt, bei der die oben erwähnten Zustandsgrößen detektiert und entsprechende Stellgrößen erzeugt werden. Die Zustandsgrößen werden über Signalaufbereitungsschaltungen in einem zentralen Ein-/Ausgabeelement so aufbereitet, dass Signale über einen Feldbus zu einer Steuereinheit gesendet werden können und von der Steuereinheit über den Feldbus wieder entsprechende Steuersignale an die Ein-/Ausgabeeinheit und an Stellelemente abgegeben werden.

Weiterhin ist aus der WO-A-92 04 813 für sich gesehen eine Regelanordnung mit einer zweistufigen Busarchitektur bekannt, bei der ein erster, den elektrischen Stellgliedern und Sensoren zugeordneter Bus, und ein zweiter, der zentralen Datenverarbeitung zugeordneter Bus, vorgesehen ist. Hierbei handelt es sich jedoch um eine einfache hierarchische Aufteilung des Bussystems in einem elektrischen Schaltschrank zur Optimierung der Datenverarbeitung.

### Vorteile der Erfindung

Die eingangs beschriebene Regelanordnung für ein fluidisches System mit z. B. einem elektrohydraulischen Regelventil und einer übergeordneten Steuereinheit, ist in vorteilhafter Weise dadurch weitergebildet, dass an der elektronischen Schaltung eine erste standardisierte Schnittstelle für die Ankopplung des ersten Bussystems und eine zweite standardisierte Schnittstelle für die Ankopplung eines zweiten, internen Bussystems vorhanden sind, dass bei einer Gruppe von mehreren Regelventilen die jeweils an ihnen angeordnete elektronische Schaltung über ihre zweite Schnittstelle direkt an das zweite Bussystem angeschaltet ist, dass die Sensoren jeweils über eine standardisierte Schnittstelle direkt an das zweite Bussystem angeschlossen sind und dass eines der Regelventile, dessen elektronische Schaltung über die erste Schnittstelle an das erste Bussystem angekoppelt ist, einen Master für die Gruppe der über das zweite Bussystem zusammengeschalteten Regelventile darstellt.

Bei der Erfindung erfolgt die Übertragung der Daten der Sensoren in vorteilhafter Weise über das zweite Bussystem an die entsprechenden elektronischen Schaltungen. Für den Anschluss des zweiten Bussystems an die elektronischen Schaltungen genügt dabei eine einzige Schnittstelle anstelle von einer Vielzahl von Anschlußsteckern, wenn jeder Sensor direkt mit der entsprechenden elektronischen Schaltung zu verbinden ist. Im herkömmlichen Aufbau würde eine Vielzahl der unterschiedlichen analogen und digitalen Sensorschnittstellen oft zu dem Problem führen, dass die Elektronik, bzw. das Gehäuse für die Elektronik am Regelventil, nicht mit allen notwendigen Schnittstellen gleichzeitig ausgeführt werden kann. Hierzu reichen dann in der Regel weder die Gehäuseoberfläche noch der Bauraum für die Elektronik aus, um alle Schnittstellen unterstützen zu können. Desweiteren muß das Gehäuse in vielen umgebungskritischen Anwendungsfällen in einer besonderen Schutzart ausgeführt werden, was angesichts einer großen Anzahl von Steckern an den Schnittstellen zu sehr hohen Kosten führen kann.

Da somit das erste Bussystem nur noch für die Übertragung der Daten der übergeordneten Steuerung dient, können die beiden Bussysteme in ihren Übertragungseigenschaften auf ihre speziellen Anforderungen hin ausgelegt werden. Insbesondere lässt sich das zweite Bussystem so auslegen, dass eine für die Regelung der Zustandsgrössen erforderliche schnelle Datenübertragung gewährleistet ist. Eine Realisierung des gesamten Signalaustausches über das übergeordnete erste Bussystem, z.B. einen Feldbus, wäre insofern nachteilig, als die Kommunikationsgeschwindigkeit üblicherweise von der Anzahl der Teilnehmer abhängig ist. Da die Teilnehmeranzahl an dem ersten Bussystem aber nicht bekannt ist, kann dieses nicht für die Rückführung der Sensorsignale an das Regelventil benutzt werden.

Da auch die Ausführung der Regelventile in unterschiedlichen Varianten für alle in Frage kommenden Einsatzfälle zu einer sehr großen Variantenanzahl führt, ist die erfindungsgemäße Lösung, bei der die Sensorsignale über einen separaten Bus, z.B. einen Sensorbus, zurückgeführt werden, außerordentlich vorteilhaft, da hier nur eine Regelventilvariante für viele unterschiedliche Aufgaben realisiert zu werden braucht.

Durch die vorgeschlagene einheitliche standardisierte Schnittstelle für alle Sensoren kann beispielsweise durch Auslesen eines elektronischen Sensortypenschildes auch geprüft werden, ob die richtigen Sensoren angeschlossen sind. Weiterhin kann ein entsprechendes Typenschild des Regelventils bzw. des Zylinders auch eine automatische Reglervoreinstellung ermöglichen, wozu lediglich ein passiver Knoten am Zylinder mit dem Sensorbus zur Ausgabe der Daten verbunden zu werden braucht.

In vorteilhafter Weise können bei der Erfindung eine Mehrzahl von Regelventilen so angeordnet werden, dass die zweite Schnittstelle und mindestens ein Sensor für eine Zustandsgröße an dem für alle Regelventile gemeinsamen zweiten Bussystem angeschaltet sind. Das Regelventil, an deren erster Schnittstelle das erste Bussystem angekoppelt ist, stellt dann einen Master für die Gruppe der zusammengeschalteten Regelventile und die anderen die Slave-Regelventile dar.

Werden, wie zuvor erwähnt, mehrere Teilnehmer mit einem Bussystem verbunden und soll ein Regelkreis über den Bus angeschlossen werden, muß eine Synchronisierung der einzelnen Teilnehmer erfolgen, um eine zeitgleiche Abtastung von Signalen zu gewährleisten. Wenn jedoch z.B. vier hydraulische Achse mit jeweils entsprechenden Regelkreisen geregelt werden sollen, so muss hier je ein Wegsensor pro Zylinderachse im Gleichlauf mit den anderen arbeiten. Hierbei stellt dann wieder ein Zylinder den Master für die anderen drei Zylinder dar; für die übergeordnete Steuerung im ersten Bussystem ist dieser Master-Zylinder dann allerdings auch wieder eine Slave. Somit kann der Gleichlaufbetrieb der vier Zylinderantriebe mit der entsprechenden Rückführung der Sensorsignale und eine Synchronisierung der vier Achsen über die Bussysteme sichergestellt werden.

In herkömmlicher Weise wird die Synchronisierung der Komponenten über eine spezielle festgelegte Synchronisierungs-Nachricht vorgenommen, beispielsweise wird dies bei einer speziellen Ausführungsform eines Feldbusses als sog. CAN-Bus (CAN = Controler Area Network) als SYNC-Nachricht bezeichnet. Diese Nachricht wird hierzu in genau festgelegten Zeitabständen vom jeweiligen Master erzeugt. Durch den Mechanismus der Busarbitrierung bei den an sich bekannten Bussystemen kann jedoch nicht sichergestellt werden, dass diese Nachricht auch in festen Zeitabständen verschickt wird, so dass die SYNC-Nachricht mit einem gewissen Jitter behaftet ist und daher nicht für einen eventuell notwendigen festen Takt im jeweiligen Slave herangezogen werden kann.

Für die Slaves im Sensorbus, z.B. einen Drucksensor, gibt es bisher zwei Betriebsmodi. Erstens den sog. Synchronbetrieb, bei dem der Slave-Sensor nach Empfang der SYNC-Nachricht mit der Wandlung des analogen Sensorsignals startet und dieses umgehend an den Master zurückschickt. Zweitens den sog. Asynchronbetrieb, bei dem der Slave-Sensor mit einem internen Takt arbeitet, in dem die Sensorsignale ermittelt werden. Bei dem Empfang der SYNC-Nachricht wird der gerade im Speicher vorhandenen Wert zum Master zurückgesendet.

Der asynchrone Betrieb wird z.B. dann gewählt, wenn auf dem Slave neben der Datenerfassung weitere Operationen die einen festen Zeittakt benötigen, wie z.B. Regelung, Filterung und Differenzierung der Sensorsignale durchgeführt werden sollen. Da der Takt des Masters und des Slaves durch Bauteiltoleranzen nie genau gleich sind, kann durch den asynchronen Betrieb eventuell keine zeitgenaue Abtastung der Slave-Sensorsignale von Seiten des Masters sichergestellt werden. Wird ein derart gewonnenes Signal im geschlossenen Regelkreis eingesetzt, wirkt sich dieser Sachverhalt negativ auf die Regelgüte aus.

Erfindungsgemäß wird in vorteilhafter Weise eine Synchronisierung des Arbeitstaktes der Regelventile durch eine feste Kopplung der Slave-Regelventile auf das Master-Regelventil in der Gruppe der zusammengeschalteten Regelventile einschließlich der am zweiten Bussystem angeschlossenen Sensoren vorgenommen. Die feste Kopplung erfolgt durch eine Vorgabe und Regelung einer im Mittel konstanten Phasenverschiebung zwischen dem Empfang einer Synchronisations-Nachricht (SYNC-Nachricht) am Master-Regelventil und dem Arbeitstakt der Slave-Regelventile im Asynchronbetrieb, wobei die Vorgabe und Regelung der konstanten Phasenverschiebung durch eine Nachlaufsynchronisation erfolgt.

Im einzelnen ist die erfindungsgemäße Anordnung insbesondere dadurch vorteilhaft, dass die Abtastung von Sensorsignalen in Phase zum Mastertakt erfolgt. Am Slave-Sensor oder am Slave-Regelventil steht damit ein zyklisches Taktsignal zur Verfügung, so dass dort bestimmte Funktionen die einen zyklischen Takt benötigen, wie z.B. die Regelung oder eine Filterung, eine Differenzierung, eine Integration des Sensorsignals ausgeführt werden können. Der Takt des Sensors bzw. des Regelventils kann dabei ein Vielfaches des Synchrontaktes betragen.

Vorteilhaft ist auch, dass die vorgeschlagene Anordnung zu einer Reduktion der Belastung der Bussysteme führt, da nicht für jeden Kommunikationszyklus eine SYNC-Nachricht benötigt wird. Die Erfassung von Messdaten und das Verschicken von Daten aufgrund einer SYNC-Nachricht kann durch die vorgebbare Phasenverschiebung zwischen dem Takt der SYNC-Nachricht und dem internem Takt im Sensor oder im Regelventil auf eine nahezu beliebige Phasenlage im Taktfenster der SYNC-Nachricht gelegt werden. Ein Master-Regelventil, das, wie oben erwähnt, gleichzeitig Slave für eine übergeordnete Steuerung ist, kann dabei auf einfache Weise den eigenen Systemtakt, für die ihm untergeordneten Slaves, aus dem übergeordneten Takt gewinnen. So lässt auf einfache Weise ein sich durchgehend synchronisierter Betrieb über mehrere Ebenen erzielen.

In vorteilhafter Weise ist zur Durchführung der Nachlaufsynchronisation einen Phasenregelkreis (PLL = Phase Locked Loop) vorhanden, der aus einem internen Taktgenerator, einem Phasendetektor und einem Phasenregler besteht, der bevorzugt eine PI-Struktur aufweist. Eine Realisierung des Phasenregelkreises erfolgt dabei bevorzugt durch eine entsprechende Programmierung der Elektronik am Regelventil oder an den Sensoren, ggf. auch durch elektronische Schaltungsbausteine. Der Slave-Sensor eines der Regelventile arbeitet hierbei im sog. Asynchronbetrieb und der Taktgenerator des Slaves wird durch die vorgeschlagenen Phasenregelung auf den Empfang der SYNC-Nachricht synchronisiert.

Durch diese Regelung wird die Frequenz des Taktgenerator auf einfache Weise derart eingestellt, dass zwischen dem Empfang der SYNC-Nachricht und dem Slavetakt eine im Mittel konstante Phasenverschiebung bei gleicher Frequenz entsteht. Die erwähnte PI-Struktur des Phasenreglers ermöglicht einen robusten Betrieb, der auch bei einem mit einem Jitter behafteten SYNC-Takt, d.h. dem zeitlichen Abstand zwischen zwei SYNC-Nachrichten, einen weitgehend konstanten Slavetakt erzeugt, der im Mittel dem SYNC-Takt entspricht.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Ausführungsbeispiele der erfindungsgemäßen Regelanordnung werden anhand der Zeichnung erläutert. Es zeigen:
Figur 1 eine Prinzipdarstellung eines elektrohydraulischen Regelventils in einer Regelanordnung mit einem ersten und einem zweiten Bussystem,
Figur 2 eine Erweiterung der Darstellung nach Figur 1 mit vier elektrohydraulischen Regelventilen und einer Synchronisierung und
Figur 3 ein Blockschaltbild eines Phasenregelkreises zur Synchronisierung.

### Beschreibung der Ausführungsbeispiele

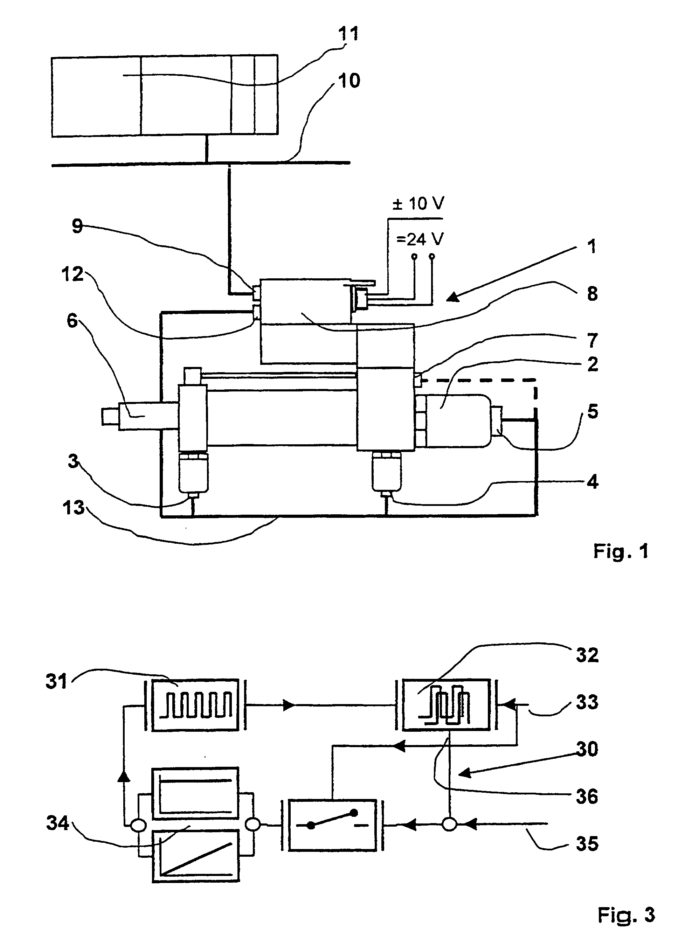

Figur 1 zeigt ein elektrohydraulisches Regelventil 1 mit einem hydraulischen Zylinderantrieb 2, an dem zwei Drucksensoren 3 und ein Wegsensor 5 für den Zylinder 6 angebracht sind. In einer elektronischen Schaltung 8, die als sog. Onboard-Electronic (OBE) ausgeführt ist, ist eine erste Schnittstelle 9 für den Anschluss eines ersten Bussystems 10 angeordnet, der ein Feldbus bzw. ein sog. CAN-Profibus ist. Am diesem Feldbus 10 könne weitere, hier nicht dargestellte Regelventile oder sonstige Busteilnehmer angeschlossen sein. Kernstück des Feldbusses 10 ist eine übergeordnete Steuereinheit 11, z.B. eine speicherprogrammierbare Steuerung (SPS), die über ein Busmodul an den Feldbus 10 angeschlossen ist.

An der elektronischen Schaltung 8 ist weiterhin eine zweite Schnittstelle 12 für den Anschluss eines zweiten Bussystems 13 angeordnet, der einen Sensorbus bzw. einen CAN-Sensorbus darstellt. Weiterhin sind noch die üblichen Anschlüsse für eine Spannungsversorgung der elektronischen Schaltung 8, z.B. 24V und +/-10V, vorhanden. Am Sensorbus 13 sind die zwei Drucksensoren 3 und ein Weg- oder Lagesensor 5 für den Zylinderantrieb 2 und ggf. ein passiver Knoten 7 für das Auslesen von Zylinderdaten am Zylinder 6 angebracht. Insbesondere mit der Rückführung des Lagesignals des Wegsensors 5, ggf. aber auch der Drucksignale der Drucksensoren 3 und 4, wird über den Sensorbus 13 eine Regelung in der elektronischen Schaltung 8 am Regelventil 1 durchgeführt. Hierbei stellt die Regelung in der elektronischen Schaltung 8 für den Sensorbus 13 den Busmaster dar; für die übergeordnete Steuerung am Feldbus 10 ist diese jedoch ein Slave.

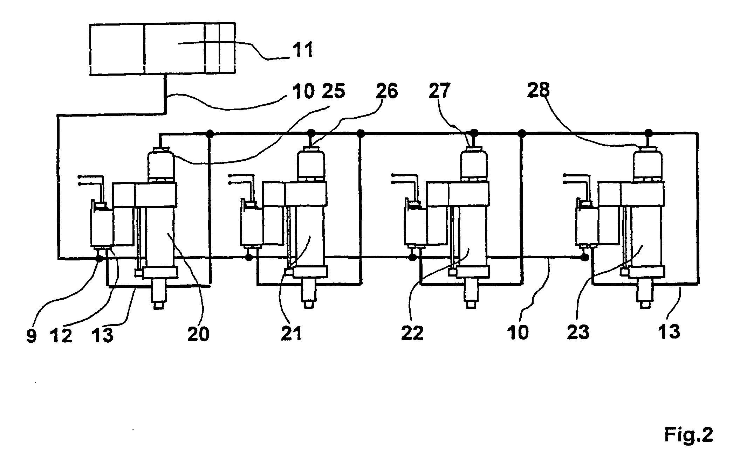

In Figur 2 ist eine Erweiterung der Anordnung nach der Figur 1 gezeigt mit vier geregelten hydraulische Zylindern 20, 21, 23 und 24, die je einen Wegsensor 25, 26, 27, und 28 je Achse aufweisen und im Gleichlauf gefahren werden sollen. Der Zylinder 20 stellt hier den Master für die anderen drei Zylinder 21, 22 und 23 dar. Für die übergeordnete Steuerung am Feldbus 10 ist dieser Zylinder allerdings auch wieder ein Slave. Über den Sensorbus 13 sind dabei die Wegsensoren 25 bis 28 und die jeweiligen zweiten Busschnittstellen 12 miteinander verbunden.

Damit die oben erwähnte Gleichlaufregelung der Zylinder 20 bis 23 funktioniert, wird beispielsweise die Synchronisierung der Komponenten über eine spezielle festgelegte Nachricht, die bei der hier gezeigten CAN-Feldbusanordnungen SYNC-Nachricht heißt, vorgenommen. Hierzu könnte in genau festgelegten Zeitabständen vom jeweiligen Master die SYNC-Nachricht erzeugt werden. Durch den besonderen Mechanismus der Busarbitrierung, wie er z.B. beim hier beschriebenen CAN-Feldbus und CAN-Sensorbus erfolgt, kann dabei jedoch nicht sichergestellt werden, dass diese Nachricht auch in festen Zeitabständen verschickt wird, so dass die SYNC-Nachricht mit einem gewissen Jitter behaftet ist und daher nicht für einen eventuell notwendigen festen Takt im Slave-Zylinder 21 bis 23 herangezogen werden kann.

Nach dem erfindungsgemäßen Ausführungsbeispiel aus der Figur 2 wird die Synchronisierung der Wegsensoren 26 bis 28 und der Regeleinheiten in der jeweiligen elektronischen Schaltung 8 der Slave-Zylinder 21 bis 23 über die jeweilige Feldbusschnittstelle 9 über den Feldbus 10 auf den Takt des Master-Zylinders 20 durchgeführt. Die Synchronisierung erfolgt über eine Vorgabe und Regelung der Phasenverschiebung zwischen dem jeweiligen Slave- und Mastertakt, wodurch die Abtastung der Sensorsignale der Wegsensoren 26 bis 28 in Phase zum Mastertakt des Wegsensors 25 erfolgt. Auf den Slave-Zylindern 21 bis 23 steht somit ein zyklisches Taktsignal zur Verfügung, so dass dort Funktionen die einen zyklischen Takt benötigen, wie z.B. Regelung, Filterung, Differenzierung, Integration des Sensorsignals ausgeführt werden können. Der Takt des jeweiligen Sensors 25 bis 28 kann dabei ein Vielfaches des eigentlichen Synchrontaktes betragen, wobei dies zu einer Reduktion der Buslast auf dem Sensorbus 13 und unter Umständen auch auf dem Feldbus 10 führt, da nicht für jeden Kommunikationszyklus eine SYNC-Nachricht benötigt wird.

Die Erfassung der Sensorsignale an den Wegsensoren 25 bis 28 und das Verschicken dieser Daten aufgrund einer SYNC-Nachricht kann durch die vorgebbare Phasenverschiebung zwischen dem Synchrontakt und einem internen Takt in der Regeleinheit des jeweiligen Zylinders 20 bis 23 und der daran angeschlossenen Slave-Sensoren auf eine nahezu beliebige Phasenlage im Fenster des Synchrontaktes gelegt werden. Der Master-Zylinder 20, der gleichzeitig Slave für die übergeordnete Steuerung der Steuereinheit 11 ist, kann dabei den eigenen Systemtakt, für die ihm untergeordneten Slave-Zylinder 21 bis 23 aus dem übergeordneten Takt des Feldbusses 10 gewinnen, wodurch sich ein durchgehend synchroner Betrieb über mehrere Hierarchieebenen der Bussysteme 10 und 13 erzielen lässt.

In Figur 3 ist ein Ausführungsbeispiel eines Phasenregelkreises 30 gezeigt mit dem die zuvor beschriebene Vorgabe und Regelung der Phasenverschiebung durchgeführt werden kann. Der Phasenregelkreis 30 ist hier durch eine entsprechende Programmierung der elektronischen Schaltung 8 am jeweiligen Regelventil oder an den Sensoren realisiert. Um eine zuverlässige Erzeugung und Auswertung der sog. SYNC-Nachricht zu erhalten, arbeiten die Wegsensoren 26 bis 28 der Slave-Zylinder 21 bis 23 im sog. Asynchronbetrieb und der Taktgenerator des jeweiligen Zylinders 20 bis 23 wird durch einen Phasenregelung, bzw. eine Nachlaufsynchronisation im Phasenregelkreis 30 auf den Empfang der SYNC-Nachricht synchronisiert.

Der Phasenregelkreis 30 besteht nach der Figur 3 aus dem internen Taktgenerator 31 und einem daran angeschlossenen Phasendetektor 32, der auch mit dem SYNC-Takt, d.h. mit dem zeitlichen Abstand der SYNC-Nachrichten, an einem zweiten Eingang 33 beaufschlagt ist. Weiterhin ist im Phasenregelkreis ein PI-Regler 34 vorhanden, der den SYNC-Takt, die Istwertphasenverschiebung am Ausgang 36 des Phasendetektors 32 und eine jeweils konstant vorgegebene Sollwertphasenverschiebung an einem Eingang 35 auswertet. Durch diese Regelung wird die Frequenz des Taktgenerators 31 derart eingestellt, dass zwischen dem Empfang des SYNC-Taktes am Eingang 33 und dem Slavetakt des Taktgenerators 31 eine im Mittel konstante Phasenverschiebung bei gleicher Frequenz entsteht.

## Patentansprüche

1. Regelanordnung für ein fluidisches System mit mindestens einem elektrohydraulischen oder elektropneumatischen Regelventil (1) sowie mit einem von diesem mit Druckmittel beaufschlagten hydraulischen bzw. pneumatischem Zylinder (6; 20, 21, 22, 23) und mit Sensoren (3, 4, 5; 25, 26, 27, 28) für mindestens eine Zustandsgröße des fluidischen Systems,
- bei der an dem Regelventil (1) eine elektronische Schaltung (8) angeordnet ist, die als Reglereinheit für mindestens eine regelbare Zustandsgröße und zur Steuerung des Regelventils (1) dient, wobei die Zustandsgröße in der elektronischen Schaltung (8) auswertbar ist und entsprechende Stellsignale für das Regelventil (1) in ihr erzeugbar sind,
- bei der das Regelventil (1) über ein erstes Bussystem (10) und Koppelelemente mit einer übergeordneten Steuereinheit (11) verbunden ist,
**dadurch gekennzeichnet,**
- **dass** an der elektronischen Schaltung (8) eine erste standardisierte Schnittstelle (9) für die Ankopplung des ersten Bussystems (10) und eine zweite standardisierte Schnittstelle (12) für die Ankopplung eines zweiten, internen Bussystems (13) vorhanden ist,
- **dass** bei einer Gruppe von mehreren Regelventilen (1) die jeweils an ihnen angeordnete elektronische Schaltung (8) über ihre zweite Schnittstelle (12) direkt an das zweite Bussystem (13) angeschaltet ist,
- **dass** die Sensoren (3, 4, 5; 25, 26, 27, 28) jeweils über eine standardisierte Schnittstelle direkt an das zweite Bussystem (13) angeschlossen sind und
- **dass** eines der Regelventile (1), dessen elektronische Schaltung (8) über die erste Schnittstelle (9) an das erste Bussystem (10) angekoppelt ist, einen Master für die Gruppe der über das zweite Bussystem (13) zusammengeschalteten Regelventile (1) darstellt.

2. Regelanordnung nach Anspruch 1, **dadurch gekennzeichnet, dass** das erste Bussystem ein Feldbus (10) und das zweite Bussystem ein Sensorbus (13) ist.

3. Regelanordnung nach Anspruch 1 oder 2, **dadurch gekennzeichnet, dass** zur Regelung mehrerer Zustandsgrößen in einem fluidischen System ein erster und ein zweiter Drucksensor (3, 4) für das Druckmittel und ein Wegsensor (5; 25, 26, 27, 28) für den Kolbenhub des Zylinders (6; 20, 21, 22, 23) vorhanden sind.

4. Regelanordnung nach einem der Ansprüche 1 bis 3, **dadurch gekennzeichnet, dass** eine Synchronisierung des Arbeitstaktes der Regelventile (1) durch eine feste Kopplung der Slave-Regelventile auf das Master-Regelventil in der Gruppe der zusammengeschalteten Regelventile (1) erfolgt.

5. Regelanordnung nach Anspruch 4, **dadurch gekennzeichnet, dass** die feste Kopplung durch eine Vorgabe und Regelung einer im Mittel konstanten Phasenverschiebung zwischen dem Empfang einer Synchronisierungs-Nachricht am Master-Regelventil und dem jeweiligen Arbeitstakt der Slave-Regelventile im Asynchronbetrieb durchführbar ist.

6. Regelanordnung nach Anspruch 5, **dadurch gekennzeichnet, dass** die Vorgabe und Regelung der konstanten Phasenverschiebung durch eine Nachlaufsynchronisation erfolgt.

7. Regelanordnung nach Anspruch 6, **dadurch gekennzeichnet, dass** die Nachlaufsynchronisation einen Phasenregelkreis (30) (PLL) aufweist, der aus einem internen Taktgenerator (31), einem Phasendetektor (32) und einem Phasenregler (34) besteht.

8. Regelanordnung nach Anspruch 7, **dadurch gekennzeichnet, dass** der Phasenregler (34) ein PI-Regler ist.

9. Regelanordnung nach Anspruch 7 oder 8, **dadurch gekennzeichnet, dass** der Phasenregelkreis (30) durch eine entsprechende Programmierung der elektronischen Schaltung (8) im jeweiligen Regelventil (1) oder in der Elektronik der Sensoren (3, 4; 25 bis 28) realisiert ist.

## Claims

1. Control arrangement for a fluidic system having at least one electrohydraulic or electropneumatic control valve (1), and having a hydraulic or pneumatic cylinder (6; 20, 21, 22, 23) to which pressure medium can be applied by this specific system, and having sensors (3, 4, 5; 25, 26, 27, 28) for at least one state variable of the fluidic system,
- in which an electronic circuit (8) which serves as a controller unit for at least one controllable state variable and for controlling the control valve (1) is arranged on the control valve (1), it being possible for the state variable to be evaluated in the electronic circuit (8) and for corresponding actuation signals for the control valve (1) to be generated in it,
- in which the control valve (1) is connected to a superordinate control unit (11) via a first bus system (10) and coupling elements,
**characterized**
- **in that** a first standardized interface (9) for coupling the first bus system (10) and a second standardized interface (12) for coupling a second, internal bus system (13) being present on the electronic circuit (8),
- **in that**, when there is a group of a plurality of control valves (1), the electronic circuit (8) which is respectively assigned to them is connected directly to the second bus system (13) via its second interface (12),
- **in that** the sensors (3, 4, 5; 25, 26, 27, 28) are each connected directly to the second bus system (13) via a standardized interface, and
- **in that** one of the control valves (1) whose electronic circuit (8) is coupled to the first bus system (10) via the first interface (9) constitutes a master for the group of control valves (1) which are connected together via the second bus system (13).

2. Control arrangement according to Claim 1, **characterized in that** the first bus system is a field bus (10), and the second bus system is a sensor bus (13).

3. Control arrangement according to Claim 1 or 2, **characterized in that** a first and a second pressure sensor (3, 4) for the pressure medium, and a displacement sensor (5; 25, 26, 27, 28) for the piston stroke of the cylinder (6; 20, 21, 22, 23) are provided for controlling a plurality of state variables in a fluidic system.

4. Control arrangement according to one of Claims 1 to 3, **characterized in that** the working stroke of the control valves (1) is synchronized by means of a fixed coupling of the slave control valves to the master control valve in the group of control valves (1) which are connected together.

5. Control arrangement according to Claim 4, **characterized in that** the fixed coupling can be carried out by predefining and controlling a phase shift, which is constant on average, between the reception of a synchronization message at the master control valve and the respective working stroke of the slave control valves in the asynchronous operating mode.

6. Control arrangement according to Claim 5, **characterized in that** the predefinition and control of the constant phase shift is carried out by means of loop control synchronization.

7. Control arrangement according to Claim 6, **characterized in that** the loop control synchronization has a phase-locked loop (30) (PLL) which is composed of an internal clock generator (31), a phase detector (32) and a phase controller (34).

8. Control arrangement according to Claim 7, **characterized in that** the phase controller (34) is a PI controller.

9. Control arrangement according to Claim 7 or 8, **characterized in that** the phase-locked loop (30) is implemented by corresponding programming of the electronic circuit (8) in the respective control valve (1) or in the electronics of the sensors (3, 4; 25 to 28).

## Revendications

1. Dispositif de régulation pour système à fluide comportant au moins une soupape de régulation (1) électro-hydraulique ou électro-pneumatique ainsi qu'un cylindre hydraulique ou pneumatique (6 ; 20, 21, 22, 23) qui reçoit de la soupape un fluide sous pression, et équipé de capteurs (3, 4, 5 ; 25, 26, 27, 28) pour au moins une grandeur d'état du système à fluide, dans lequel
- un circuit électronique (8) disposé sur la soupape de régulation (1) sert d'unité de régulation pour au moins une grandeur d'état et commande de la soupape de régulation (1), la grandeur d'état étant exploitable dans le circuit électronique (8) et des signaux de réglage correspondants pour la soupape de régulation (1) pouvant être créés à l'intérieur de celui-ci,
- la soupape de régulation (1) est reliée par un premier système de bus (10) et des éléments de couplage à une unité de commande de niveau supérieur (11),
**caractérisé en ce que**
- le circuit électronique (8) comporte une première interface standardisée (9) pour le couplage du premier système de bus (10) et une deuxième interface standardisée (12) pour le couplage d'un deuxième système de bus interne (13),
- pour un groupe de plusieurs soupapes de régulation (1) chaque circuit électronique (8) disposé dans chaque soupape, est raccordé par sa deuxième interface (12) directement au deuxième système de bus (13),
- les capteurs (3, 4, 5 ; 25, 26, 27, 28) sont raccordés directement au deuxième système de bus (13) par une interface standardisée et
- une soupape de régulation (1) dont le circuit électronique (8) est raccordé par la première interface (9) au premier système de bus (10), représente un maître pour le groupe des soupapes de régulation (1) connectées ensemble par le deuxième système de bus (13).

2. Dispositif de régulation selon la revendication 1,
**caractérisé en ce que**
le premier système bus est un bus de terrain (10) et le deuxième système de bus est un bus de capteurs (13).

3. Dispositif de régulation selon la revendication 1 ou 2,
**caractérisé en ce que**
pour la régulation de plusieurs grandeurs d'état le système de fluide comporte un premier et un deuxième capteur de pression (3, 4) pour le fluide sous pression et un capteur de course (5 ; 25, 26, 27, 28) pour la course de piston du cylindre (6 ; 20, 21, 22, 23).

4. Dispositif de régulation selon l'une quelconque des revendications 1 à 3,
**caractérisé en ce qu'**
une synchronisation de la cadence de fonctionnement des soupapes de régulation (1) s'effectue par un couplage fixe des soupapes de régulation esclave avec la soupape de régulation maître dans le groupe des soupapes de régulation (1) connectées ensemble.

5. Dispositif de régulation selon la revendication 4,
**caractérisé en ce que**
le couplage fixe peut être réalisé par une prescription et régulation d'un décalage de phase en moyenne constant entre la réception d'un message de synchronisation à la soupape maître et la cadence de fonctionnement correspondante des soupapes esclaves en fonctionnement asynchrone.

6. Dispositif de régulation selon la revendication 5,
**caractérisé en ce que**
la prescription et régulation du décalage de phase constant s'effectuent par une synchronisation retardée.

7. Dispositif de régulation selon la revendication 6,
**caractérisé en ce que**
la synchronisation retardée présente une boucle de régulation de phase (PLL) (30) qui se compose d'un générateur de cadence interne d'un détecteur de phase (32) et d'un régulateur de phase (34).

8. Dispositif de régulation selon la revendication 7,
**caractérisé en ce que**
le régulateur de phase (34) est un régulateur proportionnel - intégral PI.

9. Dispositif de régulation selon la revendication 7 ou 8,
**caractérisé en ce que**
la boucle de régulation de phase (30) est réalisée par une programmation correspondante du circuit électronique (8) dans la soupape de régulation (1) correspondante ou dans l'électronique des capteurs (3, 4 ; 25 à 28).
